# EUROPEAN PATENT SPECIFICATION

(11) **EP 3 683 466 B1**
(45) Date of publication and mention of the grant of the patent: **23.03.2022**
(21) Application number: 20152592.0
(22) Date of filing: 20.01.2020
(51) Int. Cl.: F16D 25/08

(54) **CENTRAL ACTUATOR FOR A HYDRAULIC OR PNEUMATIC CLUTCH ACTIVATION**
ZENTRALER AKTUATOR FÜR EINE HYDRAULISCHE ODER PNEUMATISCHE KUPPLUNGSBETÄTIGUNG
ACTIONNEUR CENTRAL POUR UNE ACTIVATION D'EMBRAYAGE HYDRAULIQUE OU PNEUMATIQUE

(30) Priority: 21.01.2019 DE 102019101452
(43) Date of publication of application: 22.07.2020
(73) Proprietor: FTE automotive GmbH, 96106 Ebern (DE)
(72) Inventor: GNYP, Jan, D-96106 Ebern (DE); SEIDL, Rolf, D-96106 Ebern (DE); DEUTSCHER, Julia, D-96106 Ebern (DE); HOLLANDT, Jan, D-96106 Ebern (DE)
(74) Representative: Valeo Powertrain Systems

(56) References cited:
- EP-A1- 2 905 495
- DE-A1- 19 835 707
- DE-A1-102012 210 845

## Description

The present invention relates to a central actuator for a hydraulic or pneumatic clutch activation according to the preamble of Claim 1. In particular, the invention relates to a central actuator of a hydraulic clutch activation for a motor vehicle friction clutch as are used widely in the automotive industry. In this case, the central actuator can be embodied either as a central disengaging element or as a central engaging element or as a double central engaging element or also as a combination of engaging elements and disengaging elements.

A conventional hydraulic clutch activation for motor vehicles has a master cylinder connected to a compensating reservoir filled with hydraulic fluid, which master cylinder can be activated e.g. via a clutch pedal. The master cylinder is connected hydraulically via a pressure line to a slave cylinder so that the pressure generated in the master cylinder by pushing down the clutch pedal can be transferred via the fluid column in the pressure line to the slave cylinder. As a result, an activation force acts upon the disengaging bearing of the friction clutch from the slave cylinder in order, via a disengaging mechanism, to separate the clutch pressure plate from the clutch driving plate and thus the motor from the transmission of the motor vehicle.

In order to ensure smooth activation of the friction clutch with as small a space requirement as possible of the slave cylinder, it has long been known to form the slave cylinder as an annular cylinder which is arranged around the clutch or transmission shaft and is preferably fastened to the transmission housing. An annular piston is arranged displaceably in the axial direction of the clutch or transmission shaft in the annular cylinder, which annular piston is operatively connected to the disengaging bearing of the friction clutch. In the case of hydraulic actuation of the annular cylinder via the pressure line, the annular piston acts via the disengaging bearing on the disengaging lever or on the fingers of a diaphragm spring of the friction clutch in order to disengage it. Such slave cylinders are also referred to as central disengaging elements as a result of their concentric arrangement to the clutch or transmission shaft (CSC = Concentric Slave Cylinder). In the case of a central disengaging element, the annular piston of the annular slave cylinder acts in the case of a hydraulic actuation normally generated via a hydraulic pump via an engaging bearing on corresponding engaging elements of a friction clutch in order to engage it.

State-of-the-art central actuators have a cylinder housing manufactured primarily from plastic on the grounds of cost and weight with at least one outer cylinder wall which delimits an annular pressure chamber radially to the outside, in which pressure chamber the annular piston operatively connected to the clutch is received in a displaceable manner. Where applicable, the cylinder housing manufactured from plastic also has an inner cylinder wall which delimits the pressure chamber radially to the inside and guides the annular piston; on the other hand, a guide sleeve composed primarily of steel sheet is arranged concentrically within the cylinder wall and fastened to the cylinder housing in order to delimit the pressure chamber radially to the inside and guide the annular piston. The cylinder housing furthermore has a pressure connection which discharges in the pressure chamber, via which pressure connection the pressure chamber can optionally be acted upon with the pressurizing medium in order to activate the clutch.

The method of choice for low-cost production of such cylinder housings and annular pistons in large numbers is plastic injection moulding. In order to be able to reliably withstand the high loads which occur in the case of pressurization of the pressure chamber in the region of the cylinder walls and avoid leaks, it is known, for example, from DE 20 2011 109 244 U1 to reinforce cylinder walls composed of plastic with reinforcing elements.

Just like the cylinder housing, the annular piston is also primarily manufactured from plastic on the grounds of cost and weight. In particular, plastics are used which are characterized by high rigidity and high dimensional stability. An elastomer seal ring which seals off the pressure chamber with sealing lips bearing against the outer and inner cylinder wall towards the front is fastened to the rear face side of the annular piston facing the pressure chamber. This fastening can be performed relatively easily and at low cost in a positive-locking manner, wherein an annular recess with undercuts on its side walls is incorporated into the rear face side of the annular piston, into which recess an annular base region of the seal ring engages with corresponding lateral projections. Alternatively, the seal ring could also be fastened in a firmly bonded manner, in particular with adhesive to the piston, which, however, is associated with a high outlay, additional time requirements and correspondingly higher costs. An adequately solid axial retention of the seal on the annular piston is necessary in particular in the case of prior generation of vacuum in the hydraulic system required for a bubble-free filling of the hydraulic system with hydraulic fluid, in the case of which the seal ring is drawn in and pulls the annular piston in the axial direction into the cylinder housing.

During operation, there is the risk in the case of pressurization of the seal ring that the seal material is jammed in a gap which can form radially between the annular piston and the outer cylinder wall as a result of possible deformations of the cylinder housing. Increased wear of the seal ring can also arise as a result of this displacement. In order to counter these risks, supporting rings can be arranged on the annular piston axially between the annular piston and the sealing lips of the seal ring, against which supporting rings the sealing lips can be axially supported in the event of pressurization.

A slave cylinder for a hydraulic disengaging arrangement for activating a clutch is known from DE 10 2013 214 370 A1, in the case of which the seal ring has a profile which is Y-shaped in cross-section and comprises a seal base retained in a positive-locking manner in the annular piston, an axial seal region which axially adjoins this, and adjoining this, an outer sealing lip and an inner sealing lip which run apart in a V-shape. An outer ring part is provided between the outside of the axial seal region and the cylindrical inner surface of the housing and an inner ring part is provided between the inside of the axial seal region and the cylindrical outer surface of the guide tube. The sealing lips can be axially supported on these ring parts in the case of pressurization. The ring parts should furthermore keep the volume uptake and the hysteresis of the seal ring as small as possible. Documents DE 198 35 707 A1 and EP 2 905 495 A1 disclose central actuators with sealing solutions with two sealing lips.

The object of the present invention is to propose a central actuator of the above-mentioned type for a hydraulic or pneumatic clutch activation in the case of which a jamming of seal material in a gap formed radially between the annular piston and the outer cylinder wall is reliably prevented and which nevertheless has a structure which is as simple and low-cost as possible.

This object is achieved according to the invention by a central actuator according to Claim 1. Advantageous configurations and expedient further developments of the invention will become apparent from the dependent claims, the description or the figures, wherein features described or shown here can represent a subject matter of the invention individually or in any desired combination with one another in so far as the opposite is not clearly apparent from the context.

In the case of a central actuator of a hydraulic or pneumatic clutch activation which has a slave cylinder housing with at least one annular pressure chamber which is delimited radially on the inside by an inner cylinder wall and radially on the outside by an outer cylinder wall, and in which an annular piston which is embodied partially or entirely from plastic, can be operatively connected to the clutch and is also referred to as a sliding sleeve is received in an axially displaceable manner, wherein the annular piston bears on its face side facing the pressure chamber a seal ring which bears tight both against the inner cylinder wall and against the outer cylinder wall of the cylinder housing and thus seals off the pressure chamber, wherein the seal ring has a profile which is approximately Y-shaped in cross-section with a seal base which is retained in a positive-locking manner in a recess of the annular piston formed in a complementary manner thereto, an axial seal region axially adjoining the seal base and two sealing lips adjoining this which preferably run apart in a V-shaped manner and of which an outer sealing lip with an outer edge bears against the outer cylinder wall and an inner sealing lip with an inner edge bears against the inner cylinder wall or against the cylindrical outer surface of the guide tube, the solution according to the invention proposes that a supporting ring is only arranged between the outside of the axial seal region and the outer cylinder wall, whereas no supporting ring is present between the inside of the axial seal region and the outer cylinder wall.

In this manner, the risk that seal material, upon pressurization, is jammed in a gap which forms radially between the annular piston and the outer cylinder wall is reliably avoided. At the same time, however, the annular piston with the seal ring is embodied so that it, as a result of only a single supporting ring, is embodied to be simpler and of lower cost than the embodiments known from the prior art.

According to the invention, the recess of the annular piston which receives the seal base of the seal ring lies radially between an outer portion, which surrounds the seal base on the outside, of the annular piston which extends axially up to the supporting ring with its end facing the pressure chamber, and an inner portion, which surrounds the seal base on the inside, of the annular piston, wherein the inner portion of the annular piston is formed to be longer in the axial direction than the outer portion of the annular piston and/or the inner sealing lip is formed to be wider on its side facing away from the pressure chamber in the axial direction than the outer sealing lip, and wherein the inner portion of the annular piston extends up to the inner sealing lip and bears directly against the inner sealing lip via a contact surface.

It is furthermore particularly advantageous if the contact surface runs perpendicular to the central axis of the central actuator or comprises at least one surface region running perpendicular to the central axis of the central actuator. In this manner, the outer sealing lip can be supported particularly well axially on the supporting ring in the case of a pressurization. The central axis of the central actuator lying in the centre of the annular piston is defined along the axial direction of displacement of the annular piston.

Alternatively to this, it is proposed that the contact surface is formed to be conical or comprises at least one conically formed surface region.

It can furthermore be advantageous if the contact surface is formed to be arched or comprises at least one arched surface region.

According to a first embodiment variant, the inner sealing lip and the outer sealing lip are formed to be of the same width in the axial direction on their side facing away from the pressure chamber, wherein the inner portion of the annular piston is formed to be longer in the axial direction on the pressure chamber side than the outer portion of the annular piston by an amount which corresponds to the axial width of the supporting ring.

According to a second embodiment variant, the inner portion of the annular piston and the outer portion of the annular piston are formed to be of equal length in the axial direction, wherein the inner sealing lip is formed to be wider in the axial direction on its side facing away from the pressure chamber than the outer sealing lip by an amount which corresponds to the axial width of the supporting ring.

According to a third embodiment variant, both the inner portion of the annular piston is formed to be longer in the axial direction than the outer portion of the annular piston by a first amount and the inner sealing lip is formed to be wider in the axial direction on its side facing away from the pressure chamber than the outer sealing lip by a second amount, wherein the sum of the first amount and of the second amount corresponds to the axial width of the supporting ring.

In all three embodiment variants, both sealing lips can be supported axially on the annular piston in the event of pressurization, wherein the inner sealing lip is supported directly on the contact surface of the inner portion of the annular piston, whereas the outer sealing lip only has indirect contact with the outer portion of the annular piston via the supporting ring.

In order to be able to adapt to the axial seal region of the seal ring as well as possible, it is furthermore proposed to form the supporting ring to be rounded on its inner circumference. According to a first variant, the supporting ring is only rounded on one face side, while the other face side forms an angle, in particular a right angle, with the inner circumference of the supporting ring. In this manner, the supporting ring can be embodied to be relatively low cost.

According to a second variant, the supporting ring is formed to be rounded on its inner circumference towards both face sides which are axially opposite one another. In this manner, in the case of a symmetrical cross-section of the supporting ring, the risk can be ruled out that the supporting ring is accidentally mounted the wrong way round.

According to one particularly preferred embodiment of the invention, the supporting ring is separated by a radially and axially continuous slot at one point of its circumference. As a result of this, the supporting ring can be adjusted to an inner diameter, which is increased in the case of pressurization, of the outer cylinder wall and also still optimally perform its supporting function.

It is particularly advantageous if the slot runs obliquely at an angle to a radial plane which contains the central axis of the supporting ring. The central axis of the supporting ring corresponds to the central axis of the central actuator.

The supporting ring preferably contains components from polytetrafluoroethylene or it is composed in particular entirely from polytetrafluoroethylene (PTFE), as a result of which it can be embodied with a very low coefficient of friction.

It is furthermore particularly advantageous for a stable embodiment if the supporting ring is composed of a fibre-reinforced plastic.

Further advantages and features of the invention will become apparent from the following description in relation to the exemplary embodiments represented in the drawings. In the drawings:
- Figure 1:: shows a longitudinal sectional view of a conventional central disengaging element,
- Figure 2:: shows a semi-longitudinal sectional view of a central disengaging element according to the invention,
- Figure 3:: shows a perspective view of the seal ring of the central disengaging element from Figure 2,
- Figure 4:: shows a perspective view of the supporting ring of the central disengaging element from Figure 2,
- Figure 5:: shows an enlarged representation of a cut-out of the first embodiment according to the invention shown in Figure 2,
- Figure 6:: shows a representation corresponding to Figure 5 of a variant of the first embodiment,
- Figure 7:: shows a representation corresponding to Figure 5 of a second embodiment according to the invention,
- Figure 8:: shows a representation corresponding to Figure 7 of a variant of the second embodiment,
- Figure 9:: shows a representation corresponding to Figures 6 and 8 of a third embodiment according to the invention, and
- Figure 10:: shows a representation corresponding to Figure 9 of a variant of the third embodiment.

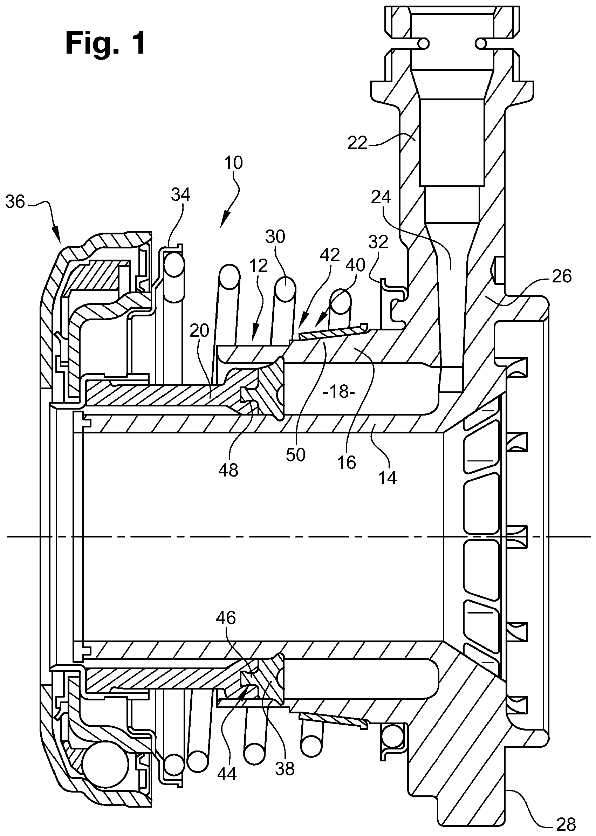

A conventional central disengaging element 10, not according to the invention, for a hydraulic clutch activation for a dry friction clutch in the non-mounted state in the base position is represented in Figure 1. Central disengaging element 10 has a cylinder housing 12 injection moulded from plastic, for example, from GF-filled polyphthalamide, with two concentrically arranged cylinder walls, namely an inner cylinder wall 14 and an outer cylinder wall 16 which delimit an annular pressure chamber 18. An annular piston 20 which can be operatively connected to the clutch (not represented) is received displaceably in the axial direction in pressure chamber 18, which annular piston 20 can optionally be acted upon via a pressure connection piece 22 of cylinder housing 12 with a pressurizing medium in order to disengage the friction clutch by displacement of annular piston 20. Pressure connection piece 22 is, for this purpose, connected via a channel 24 formed in cylinder housing 12 to pressure chamber 18 so that the pressurizing medium, namely a hydraulic fluid, can be supplied to pressure chamber 18 via channel 24. Annular piston 20 is preferably composed of a high-strength plastic which is used in particular if the annular pistons are subjected to a greater load, which is the case, for example, with dual clutch transmissions, where an annular piston is continuously under pressure load as long as the vehicle is travelling.

Cylinder walls 14 and 16 arranged concentrically to one another are connected to one another via a flange portion 26 at their end represented on the right in Figure 1. Flange portion 26 is provided on the outer circumference with a multiplicity of fastening eyelets (not represented) with angular spacing which serve in the motor vehicle in a manner known per se to fasten central disengaging element 10 to a transmission wall or a transmission cover (not represented) by means, for example, of screws which engage through the fastening eyelets and pull central disengaging element 10 with its face side 28 of cylinder housing 12 against the transmission wall or the transmission cover. Cylinder housing 12 with pressure connection piece 22 which adjoins flange portion 26, its cylinder walls 14 and 16 and flange portion 26 which connects these and bears the fastening eyelets is preferably injection moulded in one piece from plastic.

Outer cylinder wall 16 is enclosed by a preload spring 30, in the represented exemplary embodiment a conically widening helical compression spring, which is supported at its right end in Figure 1 via an annular sheet metal part 32 on flange portion 26 of cylinder housing 12 and on its left side in Figure 1 applies a defined pretensioning force on a disengaging bearing 36 known per se via a spring plate 34 deep-drawn from a metal plate. Disengaging bearing 36 is fastened to the left end of annular piston 20 in Figure 1 in a suitable manner so that disengaging bearing 36 in the case of pressurization of annular pressure chamber 18 is displaceable in the axial direction, i.e. in the horizontal direction in Figure 1, in order to disengage or engage the dry friction clutch in a manner known per se.

An annular dynamic seal in the form of a sleeve-like elastomer seal ring 38 is attached in a positive-locking manner at the rear end, on the right in Figure 1, of annular piston 20 which still overlaps with outer cylinder wall 16 in the axial direction in the represented base position. Seal ring 38 shown in the undeformed state in all the figures to simplify the representation bears tight both against inner cylinder wall 14 of cylinder housing 12 and against outer cylinder wall 16 of cylinder housing 12 in order to seal off pressure chamber 18 to the front, i.e. to the left in relation to Figure 1.

Outer cylinder wall 16 is provided with a reinforcing sleeve 40 on its outer circumferential surface 50, formed conically here, which reinforcing sleeve 40, in the position shown in Figure 1 of the parts which belong to central disengaging element 10, is fastened to outer cylinder wall 16 by means of a snap-in connection 42 which is provided at the end of reinforcing sleeve 40 facing away from pressure connection piece 22. Reinforcing sleeve 40 is arranged approximately in the central region of outer cylinder wall 16 which is to be supported against the pressure in pressure chamber 18 to avoid damaging structural changes to the plastic.

Seal ring 38 is fastened to annular piston 20 via fastening means 44 which act in a positive-locking manner. These fastening means 44 are formed here by an annular seal base 46 of seal ring 38 which is received as an axial projection in an associated axial receiving opening 48 which is incorporated in the rear face side, facing pressure chamber 18, of annular piston 20. In order to be able to ensure sufficiently solid axial retention of seal ring 38 on annular piston 20, the side walls of receiving opening 48 have in each case an undercut into which in each case a bead projecting laterally at seal base 46 engages.

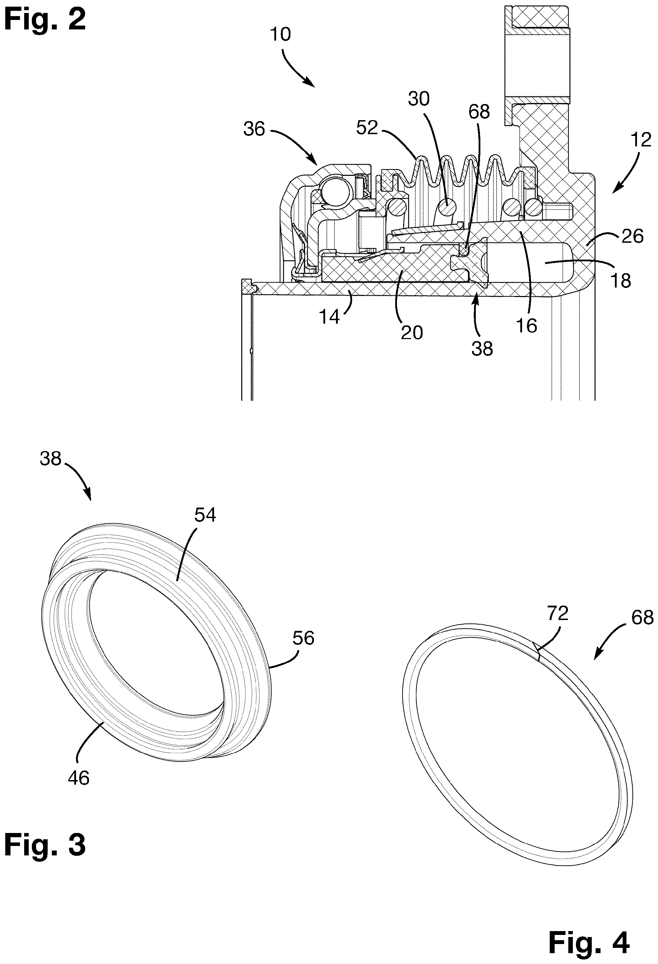

In the case of the embodiment according to the invention and represented only in half-section in Figure 2 of a central disengaging element 10, in the case of which helical compression spring 30 is surrounded by an outer protective sleeve 52 with a variable length, seal ring 38 is also fastened in a positive-locking manner to annular piston 20. Here, the seal ring has a profile which is Y-shaped in cross-section and which is composed of seal base 46, an axial seal region 54 which axially adjoins it and two sealing lips 56 and 58 which in turn adjoin axial seal region 54 and run apart in a V-shape. In order to seal off pressure chamber 18, outer sealing lip 56 bears with its outer circumference against outer cylinder wall 16, while inner sealing lip 58 bears with its inner circumference against inner cylinder wall 14.

Annular seal base 46 is retained on annular piston 20 in a positive-locking manner in annular complementary recess 48 which lies radially between an outer portion 60, which annularly surrounds recess 48 on the outside, of annular piston 20 and an inner portion 62, which delimits recess 48 on the inside in an annular manner, of annular piston 20. Outer portion 60 ends in the axial direction at an outer contact surface 64 facing outer sealing lip 56, while inner portion 62 ends in the axial direction at an inner contact surface 66 facing inner sealing lip 58.

According to the invention, a supporting ring 68 is arranged only on the outside between the outside of axial seal region 54 and outer cylinder wall 16, which supporting ring bears in the axial direction on the one hand against outer contact surface 64 of outer portion 60 of annular piston 20 and on the other hand against outer sealing lip 56. Outer sealing lip 56 is therefore in the case of a pressurization not supported directly on annular piston 20, rather only indirectly on annular piston 20 via supporting ring 68. As a result of this, material of seal ring 38 is reliably prevented from jamming in a gap 70 in the event of a pressurization, which gap 70 can form radially between annular piston 20 and outer cylinder wall 16. The inventors have recognized that such a gap formation does not occur radially between annular piston 20 and inner cylinder wall 14 so that no supporting ring is necessary radially within axial seal region 54 and inner portion 62 of annular piston 20 bears directly against inner sealing lip 58 in the axial direction via its contact surface 66. In order to be able to optimally support seal ring 38 also in the region of the transition from outer sealing lip 56 to axial seal region 54, supporting ring 68 is rounded on its inner circumference at least on the side facing outer sealing lip 56.

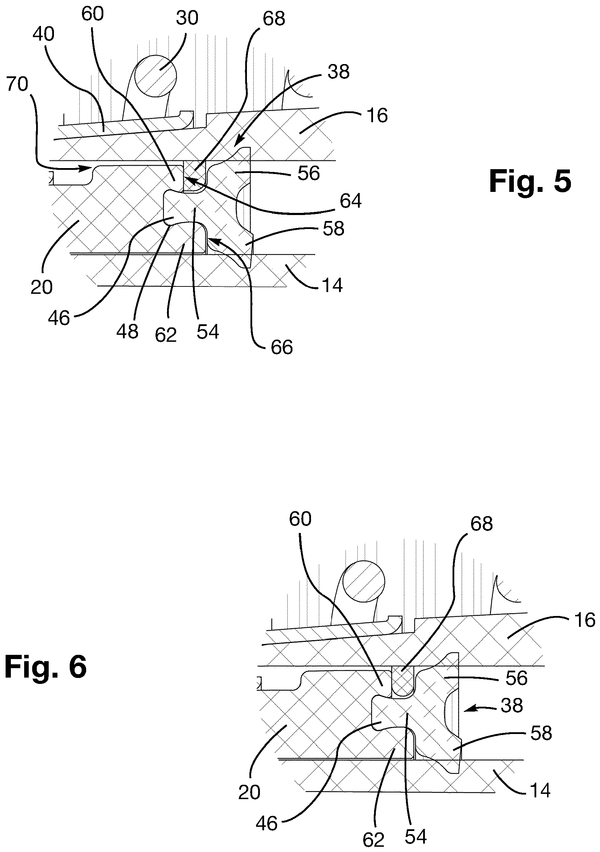

In the case of the first embodiment according to the invention and represented in Figures 5 and 6, inner portion 62 is formed to be longer in the axial direction than outer portion 60 of annular piston 20. The length difference between both portions 60 and 62 corresponds to the width of supporting ring 68 in the axial direction. While in Figure 5 supporting ring 68 is rounded on its inner circumference only on the side facing outer sealing lip 56, supporting ring 68 has, in the case of the variant from Figure 6, such a rounding on its inner circumference on both sides.

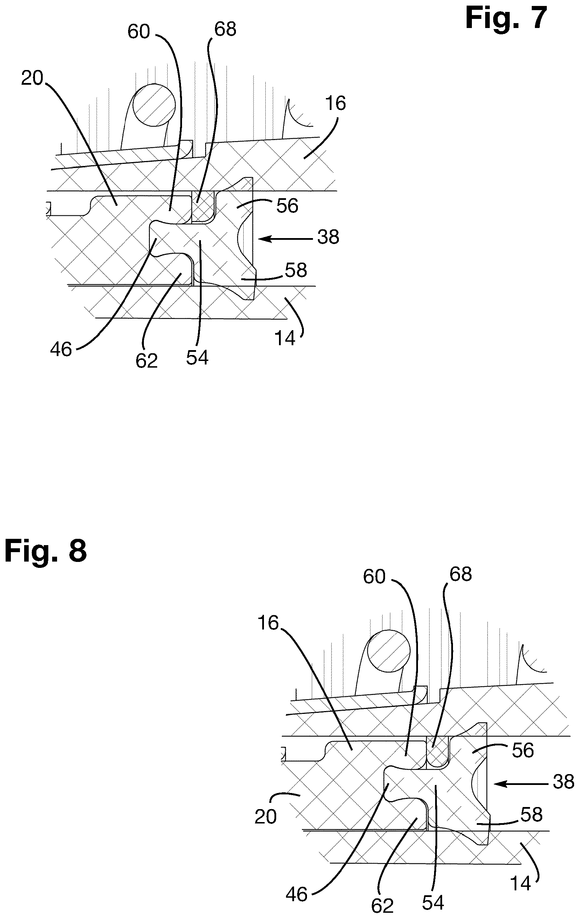

In the case of the second embodiment according to the invention shown in Figures 7 and 8, inner portion 62 and outer portion 60 of annular piston 20 are formed to be of the same length in the axial direction. For this purpose here, inner sealing lip 58 is formed to be wider on its side facing away from pressure chamber 18 in the axial direction than outer sealing lip 56. In this case too, the difference of the width between both sealing lips 56 and 58 corresponds to the axial width of supporting ring 68. Supporting ring 68 is rounded in Figure 7 on its inner circumference once again only on the side facing outer sealing lip 56, wherein, in the case of the variant of Figure 8, it is rounded on both sides on its inner circumference.

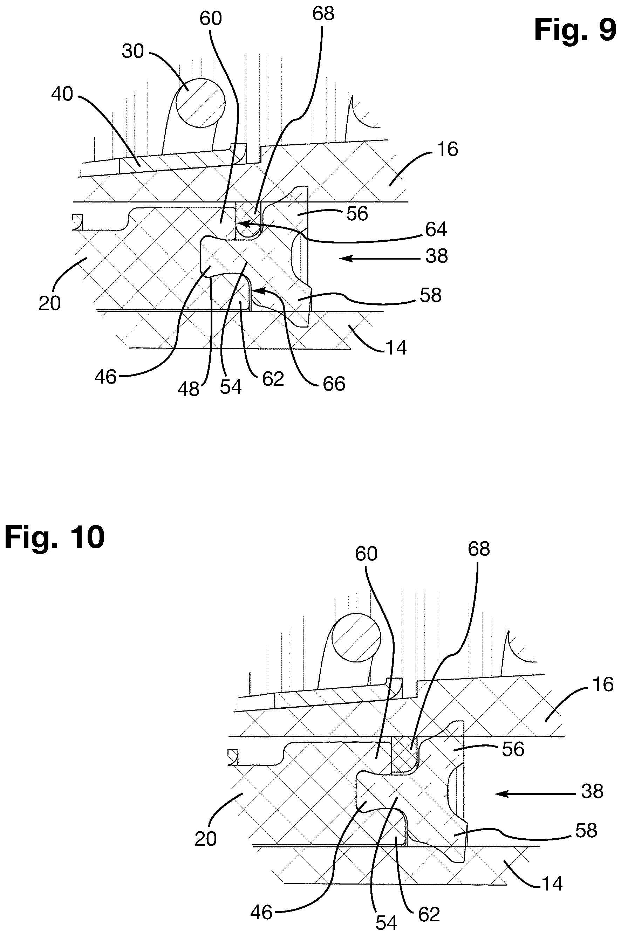

The third embodiments according to the invention shown in Figures 9 and 10 correspond to a combination of the first and second embodiment according to Figures 5 to 8. On the one hand, the inner portion of the annular piston is formed to be longer in the axial direction than the outer portion of the annular piston by a first amount and, on the other hand, the inner sealing lip is also formed to be wider in the axial direction on its side facing away from the pressure chamber than the outer sealing lip by a second amount. The sum of the first amount and of the second amount corresponds to the axial width of the supporting ring in this case. Here, supporting ring 68 in Figure 9 is rounded on its inner circumference towards both sides, while in the case of the variant of Figure 10 it is only rounded on the side facing outer sealing lip 56.

In all of the six alternatives mentioned above of Figures 5 to 10, inner portion 62 of annular piston 20 thus extends axially up to inner sealing lip 58 and bears via its contact surface 66 directly against inner sealing lip 58.

Supporting ring 64 is composed entirely of polytetrafluoroethylene (PTFE). It is interrupted at one point of its circumference by a slot 72. As is clearly apparent in Figure 4, slot 72 runs obliquely at an angle to a radial plane. As a result of the interruption, supporting ring 64 can also easily adapt to larger inner diameters of outer cylinder wall 16 which can occur in the event of a pressurization of pressure chamber 18 by deformation of cylinder housing 12 so that it can then also perform its supporting function for outer sealing lip 56.

## Claims

1. Central actuator (10) for a hydraulic or pneumatic clutch activation, with a cylinder housing (12) which comprises at least one annular pressure chamber (18) which is delimited radially by an inner cylinder wall (14) and an outer cylinder wall (16) and in which an annular piston (20) which is embodied at least partially from plastic and can be operatively connected to the clutch is received in an axially displaceable manner, to which annular piston (20) a seal ring (38) is fastened at the face side, which seal ring (38) bears tight against the inner cylinder wall (14) and against the outer cylinder wall (16) in order to seal off the pressure chamber (18), wherein the seal ring (38) has a seal base (46) which is retained in a positive-locking manner in a recess (48), formed complementary thereto, of the annular piston (20), and an axial seal region (54) which axially adjoins the seal base (46) with two sealing lips (56, 58) proceeding therefrom, of which an outer sealing lip (56) bears against the outer cylinder wall (16) and an inner sealing lip (58) bears against the inner cylinder wall (14), a supporting ring (68) is only arranged between the outside of the axial seal region (54) and the outer cylinder wall (16), wherein the recess (48) which receives the seal base (46) of the seal ring (38) lies radially between an outer portion (60), which surrounds the seal base (46) on the outside, of the annular piston (20) which extends axially up to the supporting ring (68), and an inner portion (62), which surrounds the seal base (46) on the inside, of the annular piston (20), **characterized in that** the inner portion (62) of the annular piston (20) is formed to be longer in the axial direction than the outer portion (60) of the annular piston (20) and/or the inner sealing lip (58) is formed to be wider on its side facing away from the pressure chamber (18) in the axial direction than the outer sealing lip (56), and **in that** the inner portion (62) of the annular piston (20) extends up to the inner sealing lip (58) and bears directly thereagainst via a contact surface (66).

2. Central actuator (10) according to Claim 1, **characterized in that** the contact surface (66) runs perpendicular to the central axis of the central actuator (10) or comprises at least one surface region running perpendicular to the central axis of the central actuator (10).

3. Central actuator (10) according to Claim 1 or 2, **characterized in that** the contact surface (66) is formed to be conical or comprises at least one conically formed surface region.

4. Central actuator (10) according to any one of Claims 1 to 3, **characterized in that** the contact surface (66) is formed to be arched or comprises at least one arched surface region.

5. Central actuator (10) according to any one of Claims 1 to 4, **characterized in that** the inner sealing lip (58) and the outer sealing lip (56) are formed to be of the same width in the axial direction on their side facing away from the pressure chamber (18), wherein the inner portion (62) of the annular piston (20) is formed to be longer in the axial direction than the outer portion (60) of the annular piston (20) by an amount which corresponds to the axial width of the supporting ring (68).

6. Central actuator (10) according to any one of Claims 1 to 4, **characterized in that** the inner portion (62) of the annular piston (20) and the outer portion (60) of the annular piston (20) are formed to be of equal length in the axial direction, wherein the inner sealing lip (58) is formed to be wider in the axial direction on its side facing away from the pressure chamber (18) than the outer sealing lip (56) by an amount which corresponds to the axial width of the supporting ring (68).

7. Central actuator (10) according to any one of Claims 1 to 4, **characterized in that** the inner portion (62) of the annular piston (20) is formed to be longer in the axial direction than the outer portion (60) of the annular piston (20) by a first amount and the inner sealing lip (58) is formed to be wider in the axial direction on its side facing away from the pressure chamber (18) than the outer sealing lip (56) by a second amount, wherein the sum of the first amount and of the second amount corresponds to the axial width of the supporting ring (68).

8. Central actuator (10) according to any one of Claims 1 to 7, **characterized in that** the supporting ring (68) is rounded on its inner circumference towards a face side.

9. Central actuator (10) according to any one of Claims 1 to 7, **characterized in that** the supporting ring (68) is rounded on its inner circumference towards both face sides.

10. Central actuator (10) according to any one of the preceding claims, **characterized in that** the supporting ring (68) is separated by a slot (72) at one point of its circumference.

11. Central actuator (10) according to Claim 10, **characterized in that** the slot (72) runs obliquely at an angle to a radial plane.

12. Central actuator (10) according to any one of the preceding claims, **characterized in that** the supporting ring (68) contains components of polytetrafluoroethylene or is composed entirely of polytetrafluoroethylene.

13. Central actuator (10) according to any one of the preceding claims, **characterized in that** the supporting ring (68) is composed of a fibre-reinforced plastic.

## Patentansprüche

1. Zentraler Aktor (10) für eine hydraulische oder pneumatische Kupplungsbetätigung mit einem Zylindergehäuse (12), das wenigstens eine ringförmige Druckkammer (18) umfasst, die radial von einer inneren Zylinderwand (14) und einer äußeren Zylinderwand (16) begrenzt wird und in der ein Ringkolben (20), der wenigstens zum Teil aus Kunststoff ausgeführt ist und der funktionsfähig mit der Kupplung verbunden werden kann, auf eine axial verschiebbare Weise aufgenommen ist, an welchem Ringkolben (20) ein Dichtungsring (38) an der Stirnseite befestigt ist, welcher Dichtungsring (38) dicht an der inneren Zylinderwand (14) und an der äußeren Zylinderwand (16) anliegt, um die Druckkammer (18) abzudichten, wobei der Dichtungsring (38) eine Dichtungsbasis (46) aufweist, die auf formschlüssige Weise in einer komplementär dazu geformten Vertiefung (48) des Ringkolbens (20) gehalten wird, und einen axialen Dichtungsbereich (54), der axial an die Dichtungsbasis (46) angrenzt, mit zwei davon ausgehenden Dichtungslippen (56, 58), von denen eine äußere Dichtungslippe (56) an der äußeren Zylinderwand (16) anliegt und eine innere Dichtungslippe (58) an der inneren Zylinderwand (14) anliegt, wobei ein Trägerring (68) nur zwischen der Außenseite des axialen Dichtungsbereichs (54) und der äußeren Zylinderwand (16) angeordnet ist, wobei die Vertiefung (48), die die Dichtungsbasis (46) des Dichtungsrings (38) aufnimmt, radial zwischen einem äußeren Teil (60), der die Dichtungsbasis (46) an der Außenseite umgibt, des Ringkolbens (20), der axial bis zu dem Trägerring (68) verläuft, und einem inneren Teil (62), der die Dichtungsbasis (46) an der Innenseite umgibt, des Ringkolbens (20) liegt, **dadurch gekennzeichnet, dass** der innere Teil (62) des Ringkolbens (20) so geformt ist, dass er in der axialen Richtung länger als der äußere Teil (60) des Ringkolbens (20) ist und/oder die innere Dichtungslippe (58) so geformt ist, dass sie an ihrer Seite, die von der Druckkammer (18) in der axialen Richtung weg zeigt, breiter als die äußere Dichtungslippe (56) ist, und dass der innere Teil (62) des Ringkolbens (20) bis zu der inneren Dichtungslippe (58) verläuft und über eine Kontaktoberfläche (66) direkt daran anliegt.

2. Zentraler Aktor (10) gemäß Anspruch 1, **dadurch gekennzeichnet, dass** die Kontaktoberfläche (66) senkrecht zu der zentralen Achse des zentralen Aktors (10) verläuft oder wenigstens einen Oberflächenbereich umfasst, der senkrecht zu der zentralen Achse des zentralen Aktors (10) verläuft.

3. Zentraler Aktor (10) gemäß Anspruch 1 oder 2, **dadurch gekennzeichnet, dass** die Kontaktoberfläche (66) konisch geformt ist oder wenigstens einen konisch geformten Oberflächenbereich umfasst.

4. Zentraler Aktor (10) gemäß einem der Ansprüche 1 bis 3, **dadurch gekennzeichnet, dass** die Kontaktoberfläche (66) bogenförmig geformt ist oder wenigstens einen bogenförmigen Oberflächenbereich umfasst.

5. Zentraler Aktor (10) gemäß einem der Ansprüche 1 bis 4, **dadurch gekennzeichnet, dass** die innere Dichtungslippe (58) und die äußere Dichtungslippe (56) mit der gleichen Breite in der axialen Richtung an ihrer Seite, die von der Druckkammer (18) weg zeigt, geformt sind, wobei der innere Teil (62) des Ringkolbens (20) so geformt ist, dass er in der axialen Richtung um einen Betrag, der der axialen Breite des Trägerrings (68) entspricht, länger als der äußere Teil (60) des Ringkolbens (20) ist.

6. Zentraler Aktor (10) gemäß einem der Ansprüche 1 bis 4, **dadurch gekennzeichnet, dass** der innere Teil (62) des Ringkolbens (20) und der äußere Teil (60) des Ringkolbens (20) so geformt sind, dass sie die gleiche Länge in der axialen Richtung aufweisen, wobei die innere Dichtungslippe (58) so geformt ist, dass sie in der axialen Richtung an ihrer Seite, die von der Druckkammer (18) weg zeigt, um einen Betrag, der der axialen Breite des Trägerrings (68) entspricht, breiter als die äußere Dichtungslippe (56) ist.

7. Zentraler Aktor (10) gemäß einem der Ansprüche 1 bis 4, **dadurch gekennzeichnet, dass** der innere Teil (62) des Ringkolbens (20) so geformt ist, dass er in der axialen Richtung um einen ersten Betrag länger als der äußere Teil (60) des Ringkolbens (20) ist und die innere Dichtungslippe (58) so geformt ist, dass sie in der axialen Richtung an ihrer Seite, die von der Druckkammer (18) weg zeigt, um einen zweiten Betrag breiter als die äußere Dichtungslippe (56) ist, wobei die Summe des ersten Betrags und des zweiten Betrags der axialen Breite des Trägerrings (68) entspricht.

8. Zentraler Aktor (10) gemäß einem der Ansprüche 1 bis 7, **dadurch gekennzeichnet, dass** der Trägerring (68) an seinem Innenumfang in Richtung zu einer Stirnseite abgerundet ist.

9. Zentraler Aktor (10) gemäß einem der Ansprüche 1 bis 7, **dadurch gekennzeichnet, dass** der Trägerring (68) an seinem Innenumfang in Richtung zu beiden Stirnseiten abgerundet ist.

10. Zentraler Aktor (10) gemäß einem der vorstehenden Ansprüche, **dadurch gekennzeichnet, dass** der Trägerring (68) an einem Punkt seines Umfangs durch einen Schlitz (72) getrennt ist.

11. Zentraler Aktor (10) gemäß Anspruch 10, **dadurch gekennzeichnet, dass** der Schlitz (72) in einem Winkel schräg zu einer Radialebene verläuft.

12. Zentraler Aktor (10) gemäß einem der vorstehenden Ansprüche, **dadurch gekennzeichnet, dass** der Trägerring (68) Komponenten aus Polytetrafluorethylen enthält oder vollständig aus Polytetrafluorethylen besteht.

13. Zentraler Aktor (10) gemäß einem der vorstehenden Ansprüche, **dadurch gekennzeichnet, dass** der Trägerring (68) aus einem faserverstärkten Kunststoff besteht.

## Revendications

1. Actionneur central (10) pour l'activation d'un embrayage hydraulique ou pneumatique, avec un logement de cylindre (12) qui comprend au moins une chambre de pression annulaire (18) qui est délimitée radialement par une paroi interne de cylindre (14) et une paroi externe de cylindre (16) et dans laquelle un piston annulaire (20) qui est constitué au moins partiellement de plastique et peut être fonctionnellement relié à l'embrayage est reçu d'une manière axialement déplaçable, piston annulaire (20) auquel une bague d'étanchéité (38) est fixée sur la face, laquelle bague d'étanchéité (38) appuie fermement contre la paroi interne de cylindre (14) et contre la paroi externe de cylindre (16) afin de sceller la chambre de pression (18), la bague d'étanchéité (38) ayant une embase d'étanchéité (46) qui est retenue à la manière d'un verrouillage par enclenchement dans une encoche (48), formée de façon complémentaire à celle-ci, du piston annulaire (20), et une région d'étanchéité axiale (54) qui relie axialement l'embase d'étanchéité (46) à deux lèvres d'étanchéité (56, 58) partant de là, dont une lèvre d'étanchéité externe (56) appuie contre la paroi externe de cylindre (16) et une lèvre d'étanchéité interne (58) appuie contre la paroi interne de cylindre (14), une bague de support (68) étant disposée uniquement entre l'extérieur de la région d'étanchéité axiale (54) et la paroi externe de cylindre (16), l'encoche (48) qui reçoit l'embase d'étanchéité (46) de la bague d'étanchéité (38) se trouvant radialement entre une partie externe (60), qui entoure l'embase d'étanchéité (46) sur l'extérieur, du piston annulaire (20) qui s'étend axialement jusqu'à la bague de support (68), et une partie interne (62), qui entoure l'embase d'étanchéité (46) sur l'intérieur, du piston annulaire (20), **caractérisé en ce que** la partie interne (62) du piston annulaire (20) est formée pour être plus longue dans la direction axiale que la partie externe (60) du piston annulaire (20) et/ou la lèvre d'étanchéité interne (58) est formée pour être plus large sur son côté tournant le dos à la chambre de pression (18) dans la direction axiale que la lèvre d'étanchéité externe (56), et **en ce que** la partie interne (62) du piston annulaire (20) s'étend jusqu'à la lèvre d'étanchéité interne (58) et appuie directement contre celle-ci par le biais d'une surface de contact (66).

2. Actionneur central (10) selon la revendication 1, **caractérisé en ce que** la surface de contact (66) s'étend perpendiculairement à l'axe central de l'actionneur central (10) ou comprend au moins une région de surface s'étendant perpendiculairement à l'axe central de l'actionneur central (10).

3. Actionneur central (10) selon la revendication 1 ou 2, **caractérisé en ce que** la surface de contact (66) est formée pour être conique ou comprend au moins une région de surface de forme conique.

4. Actionneur central (10) selon l'une quelconque des revendications 1 à 3, **caractérisé en ce que** la surface de contact (66) est formée pour être arquée ou comprend au moins une région de surface arquée.

5. Actionneur central (10) selon l'une quelconque des revendications 1 à 4, **caractérisé en ce que** la lèvre d'étanchéité interne (58) et la lèvre d'étanchéité externe (56) sont formées pour être de la même largeur dans la direction axiale sur leur côté tournant le dos à la chambre de pression (18), dans lequel la partie interne (62) du piston annulaire (20) est formée pour être plus longue dans la direction axiale que la partie externe (60) du piston annulaire (20) d'une quantité qui correspond à la largeur axiale de la bague de support (68) .

6. Actionneur central (10) selon l'une quelconque des revendications 1 à 4, **caractérisé en ce que** la partie interne (62) du piston annulaire (20) et la partie externe (60) du piston annulaire (20) sont formées pour être d'égale longueur dans la direction axiale, dans lequel la lèvre d'étanchéité interne (58) est formée pour être plus large dans la direction axiale sur son côté tournant le dos à la chambre de pression (18) que la lèvre d'étanchéité externe (56) d'une quantité qui correspond à la largeur axiale de la bague de support (68) .

7. Actionneur central (10) selon l'une quelconque des revendications 1 à 4, **caractérisé en ce que** la partie interne (62) du piston annulaire (20) est formée pour être plus longue dans la direction axiale que la partie externe (60) du piston annulaire (20) d'une première quantité et la lèvre d'étanchéité interne (58) est formée pour être plus large dans la direction axiale sur son côté tournant le dos à la chambre de pression (18) que la lèvre d'étanchéité externe (56) d'une deuxième quantité, dans lequel la somme de la première quantité et de la deuxième quantité correspond à la largeur axiale de la bague de support (68).

8. Actionneur central (10) selon l'une quelconque des revendications 1 à 7, **caractérisé en ce que** la bague de support (68) est arrondie sur sa circonférence interne vers une face.

9. Actionneur central (10) selon l'une quelconque des revendications 1 à 7, **caractérisé en ce que** la bague de support (68) est arrondie sur sa circonférence interne vers les deux faces.

10. Actionneur central (10) selon l'une quelconque des revendications précédentes, **caractérisé en ce que** la bague de support (68) est séparée par une fente (72) en un point de sa circonférence.

11. Actionneur central (10) selon la revendication 10, **caractérisé en ce que** la fente (72) s'étend obliquement à un angle par rapport à un plan radial.

12. Actionneur central (10) selon l'une quelconque des revendications précédentes, **caractérisé en ce que** la bague de support (68) contient des composants en polytétrafluoroéthylène ou est entièrement composée de polytétrafluoroéthylène.

13. Actionneur central (10) selon l'une quelconque des revendications précédentes, **caractérisé en ce que** la bague de support (68) est composée d'un plastique renforcé de fibres.
